# EUROPÄISCHE PATENTSCHRIFT

(11) **EP 1 368 589 B1**
(45) Veröffentlichungstag und Bekanntmachung des Hinweises auf die Patenterteilung: **28.04.2010**
(21) Anmeldenummer: 02714181.1
(22) Anmeldetag: 06.03.2002
(51) Int. Cl.: F16L 33/01

(54) **SPRINKLERANORDNUNG SOWIE UMMANTELTER SCHLAUCH BESTIMMT FÜR EINE SOLCHE**
SPRINKLER ARRANGEMENT AND ENCLOSED HOSE INTENDED FOR USE WITH THE SAME
INSTALLATION DE SPRINKLERS ET FLEXIBLE ENROBE CORRESPONDANT

(30) Priorität: 06.03.2001 DE 20103860 U
(43) Veröffentlichungstag der Anmeldung: 10.12.2003
(73) Patentinhaber: Salzgitter Mannesmann Stahlhandel GmbH, 40475 Düsseldorf (DE)
(72) Erfinder: Vieregge, Uwe, 36037 Fulda (DE)
(74) Vertreter: Stoffregen, Hans-Herbert
(86) Internationale Anmeldenummer: PCT/EP2002/002441
(87) Internationale Veröffentlichungsnummer: WO 2002/070071

(56) Entgegenhaltungen:
- EP-A- 0 503 369
- FR-A- 2 759 141
- GB-A- 926 215
- US-A- 3 023 496

## Beschreibung

Die Erfindung bezieht sich auf eine verbindungsanordnung zwischen einem ein Falten- oder Wellrohr mit dieses umgebender Ummantelung umfassenden Sprinklerschlauch mit einem den Schlauch endseitig abschließenden rohrförmigen Abschlussstück und einem rohrförmigen Anschlusseiement.

Die WO 95/25923 bezieht sich auf eine Sprinkleranordnung mit Rohreinheiten, die aus zueinander verstellbaren und verschwenkbaren Abschnitten bestehen, wodurch eine hohe Flexibilität und Variabilität der Einstellmöglichkelten für die von den Rohreinheiten ausgehenden Sprinklerköpfen gegeben ist. Dabei besteht aufgrund der Verbindungsart zwischen den Rohrabschnitten die Möglichkeit, vorhandene Teleskoprohre bei Betrieb längenmäßig zu verstellen.

Auch wenn durch die Verstellbarkeit der Rohrabschnitte zueinander erwähntermaßen eine hohe Variabilität gegeben ist, ist der maximale Abstand, der zwischen dem Anschluss der Rohreinheit zu der Strangleitung und dem Sprinklerkopf besteht, weiterhin begrenzt, so dass zur hinreichenden flächigen Abdeckung von Räumen eine Vielzahl von Strangleitungen erforderlich sind, um von diesen Rohreinheiten und damit Sprinklerköpfe ausgehen zu lassen. Eine große Anzahl von Strangleitungen bedeutet jedoch Material-, Montage- und somit Kostenaufwand.

Aus der FR-A-2 759 141 ist ein von einer Ummantelung umgebenes Wellrohr bekannt, das in der lebensmittelverarbeitenden Industrie oder im Ofenbau zum Einsatz gelangt. Das Rohr weist ein Abschlussstück auf, das mit dem Rohr verschweißt ist.

Nach der GB-A-926 215 werden aus Kunststoff bestehende Rohre über aus Kunststoff bestehende Anschluss- und Abschlussstücke verbunden, die ihrerseits über einen Sprengring gesichert sind. In einer den Sprengring aufnehmende Nut ist zusätzlich ein Einsatz aus Elastomermaterial eingebracht.

Der vorliegenden Erfindung liegt die Aufgabe zugrunde, eine Verbindungsanordnung der einganges genannten Art so weiterzubilden, dass eine sichere Verbindung zwischen dem Anschlussstück und dem Abschlussstück erfolgen kann. Gleichzeitig soll sichergestellt sein, dass der von dem Abschlussstück ausgehende Sprinklerschlauch hohen mechanischen Belastungen standhält, wobei insbesondere die Verbindungsbereiche zwischen dem Falten- bzw. Wellrohr und dem Abschlussstück geschützt sein soll.

Die Aufgabe wird erfindungsgemäß dadurch gelöst, dass das Abschlussstück eine Steckhülse ist, die mit dem rohrförmigen Anschlusselement über einen Sprengring verbunden ist, dass die Steckhülse in ihrem schlauchseitigen Ende zwei über eine Stufe getrennte Ringabschnitte umfasst, dessen äußerer Abschnitt einen geringeren Außendurchmesser als angrenzender innerer Abschnitt aufweist, dass der innere Abschnitt einen Außendurchmesser aufweist, der größter als Innendurchmesser des Falten- oder Wellrohre ist, dass das Falten- bzw. Wellrohr im Bereich der Stufe mit der Steckhülse verschweißt ist, dass sich die Ummantelung entlang des inneren Abschnitts erstreckt, dass die Steckhülse mit einem hohlzylindrischen Ringelement verschweißt ist, dessen axiale Erstreckung in radialer Projektion sowohl endseitigen Bereich des Falten- bzw. Wellrohrs als auch den der Ummantelung übergreift, und dass das Ringelement mit der Ummantelung verpresst ist.

Erfindungsgemäß gelangt ein insbesondere mit Stahlgeflecht umgebenes Well- oder Faltenrohr als der ummantelte Schlauch zum Einsatz, der zumindest an einem Ende, vorzugsweise an seinem jeweiligen Ende mit einem Abschlussstück versehen ist, das als Steckhülse ausgebildet ist. Somit ist mit einfachen Maßnahmen eine Verbindung mit einem rohrförmigen Verbindungselement wie Anschlussfitting oder Reduzierfitting möglich, ohne dass ein Lösen bzw. Festziehen von Schraubverbindungen, Klemmen oder Schellen erforderlich ist, und ohne dass Einbußen hinsichtlich der Sicherheit in Kauf genommen werden müssen; denn dadurch, dass das Abschlussstück in Form der Steckhülse mit dem Verbindungselement über einen Sprengring zueinander lagefixiert wird, ist eine sichere Verbindung gegeben, die ein unkontrolliertes Lösen ausschließt.

Durch die Verwendung des Ringelementes, das einerseits von der Ummantelung ausgeht und andererseits mit der Steckhülse verschweißt ist, erfährt der Schlauch in seinem Endbereich eine Versteifung derart, dass auch bei starkem Biegen des Schlauches die Gefahr einer Beschädigung ausgeschlossen ist, so dass insbesondere Schweißstellen nicht brechen können. Hierzu ist vorgesehen, dass der Schlauch endseitig zurückversetzt zum Endbereich der Ummantelung verläuft und dass das hohlzylinderische Ringelement eine axiale Erstreckung derart aufweist, dass dessen radiale Projektion sowohl endseitigen Bereich des Schlauchs als auch endseitigen Bereich der Ummantelung übergreift. Somit ist eine sichere Fixierung und Führung des Wellrohrs und dessen Ummantelung gegeben, wobei die Schweißnaht, über die der Schlauch mit der Steckhülse verbunden ist, geschützt ist.

Die Steckhülse sollte in ihrem schlauchseitigen Ende zwei Ringabschnitte aufweisen, deren äußerer Abschnitt einen geringeren Außendurchmesser als angrenzender innerer Abschnitt aufweist, wobei der Schlauch wie das Wellrohr mit dem äußeren Abschnitt verschweißt ist und die Ummantelung sich abschnittsweise entlang des inneren Abschnitts erstreckt. Ferner ist das hohlzylinderische Ringelement mit der Außenfläche des inneren Abschnitts verschweißt.

Dadurch, dass der Schlauch auf dem äußeren Abschnitt abgestützt verläuft und die Verbindung (Schweißnaht) zwischen Schlauch und Steckhülse im Bereich der Stufe zwischen innerem und äußerem Abschnitt verläuft, ist auch bei Biegen des Schlauches die Schweißnaht geschützt.

Da des Weiteren der Außendurchmesser des inneren Abschnitts der Steckhülse größer als der Innendurchmesser des Schlauchs ist, ist ein einfaches Aufstecken des Schlauches wie Wellrohr möglich, wodurch durch die voneinander abweichenden Durchmesser des inneren und äußeren Abschnitts eine Stufe ausgebildet ist, die von dem Schlauch nicht überwunden werden kann. Somit ist eine eindeutige Fixierung möglich.

Des Weiteren sollte der innere Abschnitt durch einen ring- oder wulstartigen Anschlag begrenzt sein, der seinerseits von dem hohlzylinderischen Element nicht überwunden werden kann. Gegenüberliegend dient der ring- oder wulstartige Anschlag seinerseits als Anschlagkante für ein auf die Steckhülse aufzubringendes Anschlussstück, durch die sichergestellt wird, dass ein Verrasten des von dem Anschlussstück ausgehenden Sprengrings in entsprechender Nut der Steckhülse erfolgt.

Um die Steckhülse problemlos in ein Anschlussstück einstecken zu können, sollte erstere in ihrem anschlussseitigen Ende angefast sein.

Die Steckhülse weist zwischen dem Anschlag und ihrem anschlussstückseitigen Ende eine umlaufende Außennut auf, in die erwähntermaßen bei in dem Anschlussstück eingesteckter Position der Steckhülse der von dem Anschlussstück aufgenommene Sprengring einrastet.

Der Sprengring verläuft in einer umlaufenden Innennut des Anschlussstückes, zu der beabstandet eine weitere Innennut vorgesehen ist, in der ein außenseitig ein der Steckhülse sich dichtend anlegendes Dichtelement wie O-Ring eingebracht ist.

Bei dem Anschlussstück kann es sich um ein Anschlussfitting für eine Strangleitung und/oder ein Reduzierfitting für einen Sprinklerkopf oder einen Anschluss für einen solchen selbst handeln.

Das Rohr selbst sollte eine Länge L mit insbesondere L =1.000 mm, 1.500 mm oder 2.000 mm aufweisen. Des Weiteren sollte das Rohr vorzugsweise einen Innendurchmesser von 27 mm und einen Außendurchmesser von 32 mm aufweisen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: eine Prinzipdarstellung der Anbindung von Sprinklern an ersten und zweiten Strangleitungen,
- Fig. 2: eine weitere Prinzipdarstellung der Anbindung von hängenden Sprinklern an ersten und zweiten Strangleitungen,
- Fig. 3: eine Prinzipdarstellung einer von einer Strangleitung ausgehenden starren Rohreinheit,
- Fig.4: eine Prinzipdarstellung eines von einer Strangleitung ausgehenden flexiblen Schlauchs,
- Fig. 5: eine perspektivische Darstellung eines flexiblen Schlauchs mit Steckhülsen,
- Fig. 6: eine Seitenansicht des Schlauchs gemäß Fig. 5, teilweise geschnitten,
- Fig. 7: eine vergrößerte Darstellung einer der Fig. 6 zu entnehmenden Steckhülse,
- Fig. 8: eine perspektivisch Darstellung eines Anschlussstückes,
- Fig. 9: das Anschlussstück gemäß Fig. 8 in Seitenansicht, teilweise geschnitten,
- Fig. 10: eine perspektivische Darstellung eines Schlauches mit auf dessen Steckhülsen aufgebrachten Anschlussfittings und
- Fig. 11: die Anordnung gemäß Fig. 10 in Seitenansicht, teilweise geschnitten.

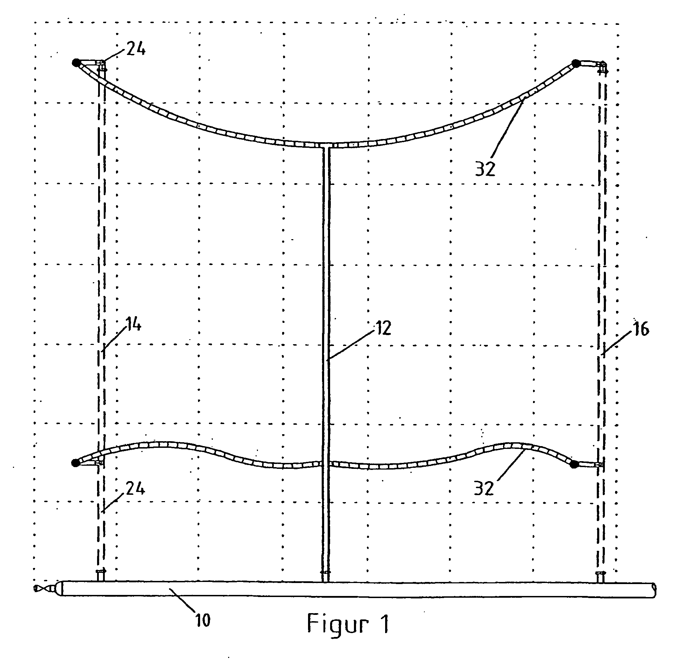

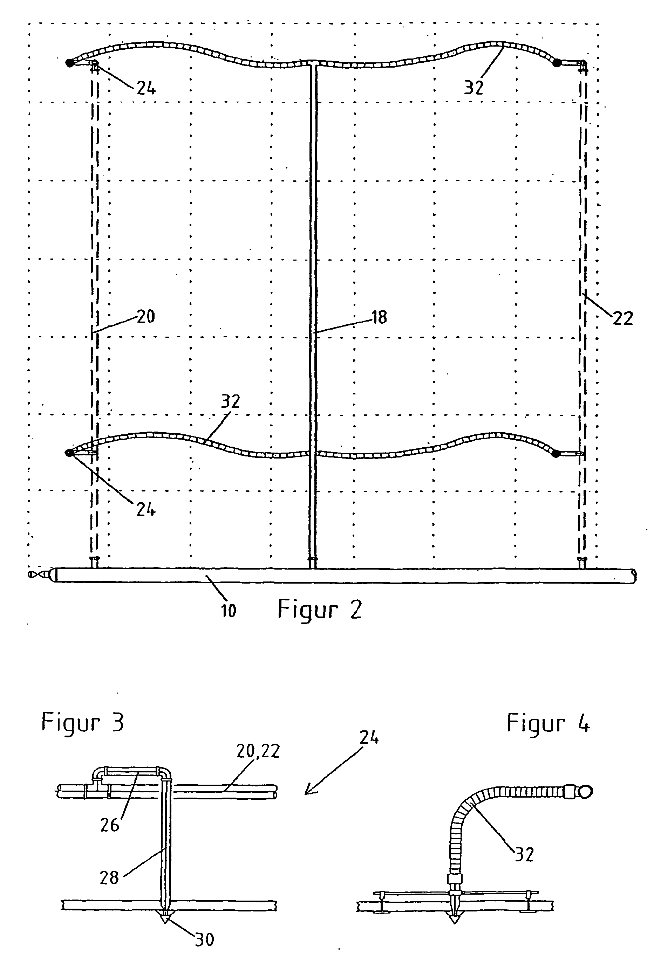

Anhand der Fig. 1 - 4 sollen prinzipielle Unterschiede von Sprinkleranordnungen erläutert werden, bei denen Sprinklerköpfe zum Einsatz gelangen, die von starren Rohreinheiten (Fig. 3) oder flexiblen Schläuchen (Fig. 4) ausgehen.

Sprinkleranlagen verhindern bekanntlich die Ausbreitung von lokalen Entstehungsbränden und tragen zum Schutz von Menschen und Sachwerten bei. Hierzu werden im Deckenbereich von Räumen Hauptleitungen 10 verlegt, von denen entsprechend der Fig. 1 und 2 erste Strangleitungen 14, 16, 20, 22 bzw. zweite Strangleitungen 12, 18 ausgehen. An den ersten Strangleitungen 14, 16, 20, 22 sind starre Rohreinheiten 24 angebunden, die aus zueinander verschwenkbaren bzw. teleskopartig verlängerbaren Abschnitten 26, 28 bestehen, wie dies aus der WO 95/25923 bekannt ist. Endseitig weist die starre Rohreinheit 24 gewohnterweise einen Sprinklerkopf 30 aus.

Die ersten Strangleitungen 14, 16, 20, 22 sind in den Fig. 1 und 2 gestrichelt dargestellt. Ungeachtet der zueinander verstellbaren Abschnitte 26, 28 der Rohreinheiten 24 ist die Kreisfläche, die der Sprinklerkopf 30 abdecken kann, recht eingeschränkt. Daher müssen in relativ engen Abständen zueinander die ersten Rohrleitungen 14, 16 bzw. 20, 22 verlaufen, um im gewünschten Umfang Räume zu sichern.

Erfindungsgemäß ist vorgesehen, dass die ersten Strangleitungen 14, 16, 20, 22 durch zweite ebenfalls von den Hauptleitungen 10 ausgehende Strangleitungen 12, 18 ersetzt werden, wobei zwischen zwei für starre Rohreinheiten 24 bestimmte ersten Strangleitungen 14, 16 bzw. 20, 22 eine zweite Strangleitung 12, 18 verläuft, von denen flexible ummantelte Rohre 32 ausgehen, die aufgrund ihrer Länge, die vorzugsweise in etwa 1.000 mm, 1.500 mm oder 2.000 mm betragen sollte, eine größere Fläche abdecken können, wie anhand der Fig. 1 und 2 verdeutlicht wird. Somit ist allein die Anzahl der Abgänge von den zweiten Strangleitungen 12, 18 zu verändern, um mit einer einzigen zweiten Strangleitung 12, 18 eine gleiche Anzahl von Sprinklerkopfpositionen zu erhalten, wie diese mit den starren Rohreinheiten 24 und den ersten Strangleitungen 14, 16, 20, 22 erzielbar sind. Dabei ist zusätzlich der Vorteil gegeben, dass die Länge der zweiten Strangleitung geringer als die der ersten Strangleitungen 14, 16, 20, 22 sein kann, wie die Fig. 1 verdeutlicht, ohne dass erwähntermaßen Einbußen in Bezug auf die flächige Abdeckung der Sprinklerköpfe in Kauf genommen werden müssen.

Mit anderen Worten werden aufgrund der erfindungsgemäßen Lehre zwei Strangleitungen durch eine Strangleitung kürzerer Länge ersetzt.

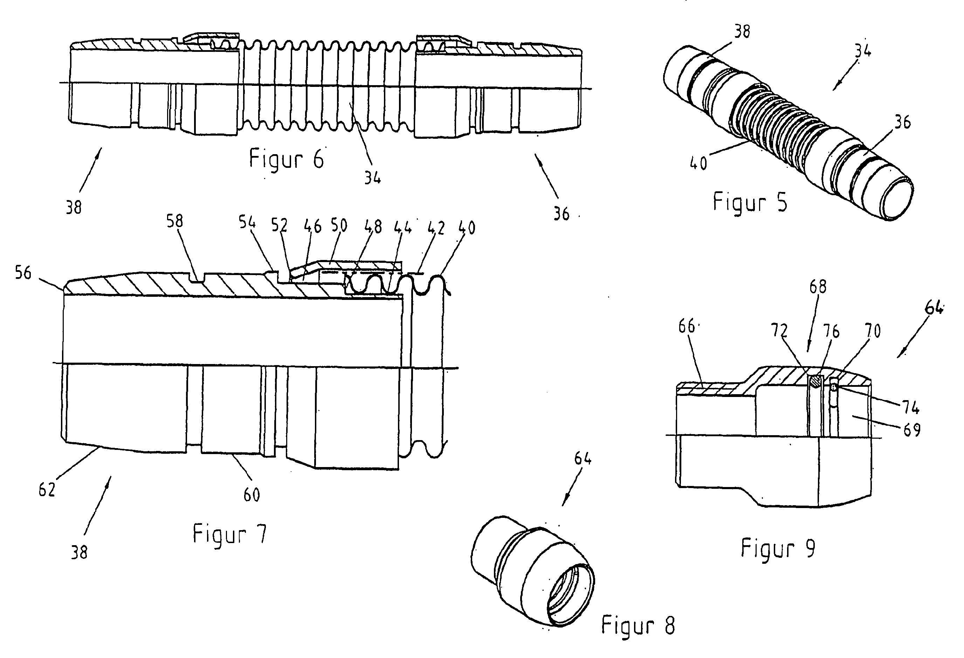

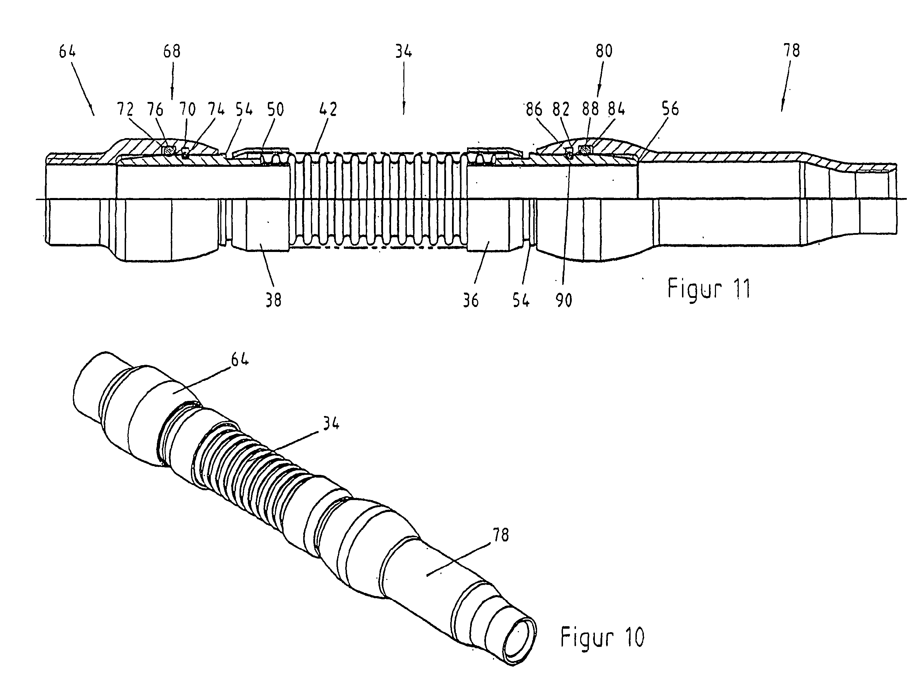

In Fig. 5 ist rein prinzipiell ein ummantelter flexibler Schlauch 34 mit Endstücken in Form von Steckhülsen 36, 38 dargestellt. Bei dem Schlauch 40 selbst handelt es sich insbesondere um ein Wellrohr- oder -schlauch, gleichwenn selbstverständlich auch ein Faltenrohr oder -schlauch zum Einsatz gelangen kann. Das Wellrohr 40 ist dabei von einer Stahlgeflechtummantelung 42 umgeben, wie anhand der Fig. 7 und 11 angedeutet ist. Von dem jeweiligen Ende des Schlauches 34 gehen die Steckhülsen 36 und 38 aus. Anhand der Fig. 7 wird die Steckhülse 38 näher erläutert, die der Steckhülse 36 entspricht.

Die Steckhülse 38 weist außenseitig einen äußeren Ringabschnitt 44 und einen angrenzenden inneren Ringabschnitt 46 auf, die über eine Stufe 48 voneinander getrennt sind. Der Wellschlauch 40 erstreckt sich entlang des äußeren Abschnitts 38 kleineren Durchmessers und ist mit seinem Ende im Bereich der Stufe 48 mit der Steckhülsen 38 verschweißt. Die Ummantelung 42 erstreckt sich abschnittsweise entlang der Außenfläche des inneren Abschnitts 46 und ist von einem hohlzylinderischen Ringelement 50, das auch als Schweißring bezeichnet werden kann, umgeben, das sich über das freie Ende der Ummantelung 42 erstreckt und mit seinem freien äußeren in Richtung der Steckhülse 38 gebogenen Endabschnitts 52 mit dieser verschweißt ist. Zur Sicherung der Ummantelung 42 in Form eines Metallgewebes ist diese mit dem Schweißring verpresst, so dass eine Fixierung gegeben ist. Auch kann zusätzlich ein Verschweißen erfolgen.

Das Ringelement 50 weist dabei eine axiale Erstreckung derart auf, dass innerhalb radialer Projektion des Ringelementes 50 der Wellschlauch 40 übergriffen ist. Des Weiteren sollte das Ringelement 50 endseitig in etwa mit schlauchseitigem Ende der Steckhülse 38 enden, wie die Darstellung der Fig. 7 verdeutlicht.

Der innere Abschnitt 46 ist von einem umlaufenden wulstartigen Abschnitt 54 begrenzt, der die Funktion eines Anschlages aufweist.

Im Abstand vom Anschlag 54 und zum dem Schlauch abgewandten freien Ende 56 der Steckhülse 38 verläuft eine umlaufende Nut 58 in einem eine Zylinderform aufweisenden weiteren Abschnitt 60 der Steckhülse, die in einen konisch sich verjüngenden oder angefasten Abschnitt 62 übergeht, der im freien Ende 56 der Steckhülse 38 endet. Durch den angefasten Endabschnitt 62 kann die Steckhülse 38 problemlos in ein Anschlussstück eingesetzt werden.

Ein entsprechendes Anschlussstück in Form eines Anschlussfittings 64 ist in den Fig. 8 und 9 dargestellt. Das Anschlussfitting 64 weist einen zylinderischen Endabschnitt 66 auf, der auf einen Anschluss einer der zweiten Strangleitungen 12, 18 schraubbar ist. Der Abschnitt 66 geht in einen zweiten Abschnitt 68 größeren Durchmessers über, der einen Innenraum 69 mit einem Innendurchmesser aufweist, der gleich oder geringfügig größer als Außendurchmesser des Zylinderabschnitts 60 der Steckhülse 38 ist. In dem Abschnitt 68 sind zwei umlaufende Innennuten 70, 72 vorhanden, von denen äußere Ringnut 70 einen Sprengring 74 und innere umlaufende Nut 72 eine Dichtung wie O-Ring 66 aufweisen. Wird nun die Steckhülse 38 in den Innenraum 69 des Anschlussfittings 64 im hinreichenden Umfang eingeführt, kann der Sprengring 74 in die Nut 58 der Steckhülse 38 einrasten, so dass eine sichere Verbindung gegeben ist. Gleichzeitig erfolgt eine hinreichende Abdichtung zwischen der Steckhülse 56 und dem Anschlussfitting 64 über die O-Ringdichtung 76.

Damit die Einsteckhülse 38 im hinreichenden Umfang in den Innenraum 69 des Anschlussfittings 64 bei gleichzeitiger Überprüfung hineingeschoben werden kann, dass ein Verrasten des Sprengringes 74, also dessen Eingreifen in die Nut 58 der Einsteckhülse 38 auch tatsächlich erfolgt, ist der Anschlag 54 vorgesehen, dessen Abstand zum freien Ende 56 der Einsteckhülse auf den Abstand der axialen Strecke Erstreckung des Innenraums 69 des Abschnitts 68 des Anschlussfittings 64 ausgelegt ist.

In den Fig. 10 und 11, in denen die den vorherigen Ausführungsbeispielen zu entnehmenden Bezugszeichen verwendet werden, ist der Schlauch 34 einerseits mit dem Anschlussfitting 64 und andererseits mit einem Reduzierfitting 78 verbunden, wobei der Schlauch 34 an seinem jeweiligen Ende die Einsteckhülsen 36 bzw. 38 aufweist. Von dem Reduzierfitting 78 geht sodann ein nicht dargestellter Sprinklerkopf aus.

Schlauchseitig weist das Reduzierfitting 78 eine Geometrie auf, die dem Abschnitt 68 des Anschlussfittings 64 entspricht. Der entsprechende Abschnitt des Reduzierfittings 78 ist mit dem Bezugszeichen 80 versehen. Der Abschnitt 80 umfasst somit ebenfalls eine äußere umlaufende Innennut 82 und eine innere umlaufende Innennut 84, in die einerseits ein Sprengring 86 und andererseits ein O-Ring 88 eingebracht sind. Somit erfolgt ein Verrasten zwischen dem Reduzierfitting 78 und der Steckhülse 36 dann, wenn die Steckhülse 36 mit ihrem zwischen dem Anschlag 54 und dem freien Ende 56 verlaufenden Abschnitt im erforderlichen Umfang in den Innenraum des Abschnitts 80 eingesteckt ist, so dass der Sprengring 86 in die der Außennut entsprechenden Außennut 90 der Steckhülse 36 eingreift.

Aus der Fig. 11 ergibt sich, dass sich das Anschlussfitting 64 und das Reduzierfitting 78 mit ihrem jeweiligen freien Stirnwandbereich an dem Anschlag 54 der Einsteckhülse 36, 38 anliegen, wenn diese mit den Fittings 64, 78 verrastet sind. Zusätzliche Sicherungsmaßnahmen zwischen den Fittings 64, 78 oder sonstigen Anschlussstücken und den Einsteckhülsen 36, 38, insbesondere zusätzliche Schraubensicherungen, sind nicht erforderlich.

## Patentansprüche

1. Verbindungsanordnung zwischen einem ein Falten- oder Wellrohr (40) mit dieses umgebender Ummantelung (42) umfassenden Sprinklerschlauch (34) mit einem den Schlauch endseitig abschließenden rohrförmigen Abschlussstück (36, 38) und einem rohrförmigen Anschlusselement (64, 78),
**dadurch gekennzeichnet,**
**dass** das Abschlussstück (36, 38) eine Steckhülsen ist, die mit dem rohrförmigen Anschlusselement (64, 78) über einen Sprengring (74, 86) verbunden ist, dass die Steckhülse in ihrem schlauchseitigen Ende zwei über eine Stufe (48) getrennte Ringabschnitte (44, 46) umfasst, dessen äußerer Abschnitt (44) einen geringeren Außendurchmesser als angrenzender innerer Abschnitt (46) aufweist, dass der innere Abschnitt einen Außendurchmesser aufweist, der größer als Innendurchmesser des Falten- oder Wellrohrs ist, dass das Falten- bzw. Wellrohr im Bereich der Stufe mit der Steckhülse verschweißt ist, dass sich die Ummantelung entlang des inneren Abschnitts (46) erstreckt, dass die Steckhülse mit einem hohizylindrischen Ringelement (50) verschweißt ist, dessen axiale Erstreckung in radialer Projektion sowohl endseitigen Bereich des Falten- bzw. Wellrohrs als auch den der Ummantelung übergreift, und dass das Ringelement mit der Ummantelung verpresst ist.

2. Verbindungsanordnung nach Anspruch 1,
**dadurch gekennzeichnet,**
**dass** das hohlzylinderische Ringelement (50) wie Schweißring eine axiale Erstreckung derart aufweist, dass dessen schlauchseitiges Ende in oder in etwa in einer Ebene verläuft, die vom schlauchseitigen Ende der Steckhülse (36, 38) aufspannbar ist

3. Verbindungsanordnung nach Anspruch 1 oder 2,
**dadurch gekennzeichet,**
**dass** das hohlzylinderische Ringelement (50) mit der Außenfläche des inneren Abschnitts (46) der Steckhülse (38) verschweißt ist.

4. Verbindungsanordnung nach zumindest einem der vorhergehenden Ansprüche,
**dadurch gekennzeichnet,**
**dass** der innere Abschnitt (46) schlauchabgcwandt durch einen ring- oder wulstartigen Anschlag (54) begrenzt ist.

5. Verbindungsanordnung nach zumindest einem der vorhergehenden Ansprüche,
**dadurch gekennzeichnet,**
**dass** die Steckhülse (36, 38) in ihrem anschlussstückseitigen Ende (62) angefast ist.

## Claims

1. Connecting arrangement between a sprinkler hose (34) comprising a corrugated tube (40) with jacketing surrounding it and having a tubular end piece (36, 38) sealing the hose at the end and a tubular connection element (64, 78),
**wherein**
the end piece (36, 38) is a plug-in sleeve connected via a snap ring (74, 86) to the tubular connection element (64, 78), wherein the plug-in sleeve comprises in its end on the hose side two annular sections (44, 46) separated by a step (48), the outer section (44) having a lower outer diameter than the adjacent inner section (46), wherein the inner section has an outer diameter greater than the inner diameter of the corrugated tube, wherein the corrugated tube is welded in the area of the step to the plug-in sleeve, wherein the jacketing extends along the inner section (46), wherein the plug-in sleeve is welded to a hollow-cylindrical ring element (50) whose axial extent in the radial projection encloses the end areas of both the corrugated tube and the jacketing, and wherein the ring element is bonded to the jacketing.

2. Connecting arrangement according to Claim 1,
**wherein**
the hollow-cylindrical ring element (50) such as a welded ring has an axial extent such that its hose-side runs inside or approximately inside a plane that can be spanned by the hose-side end of the plug-in sleeve (36, 38).

3. Connecting arrangement according to Claim 1 or 2
**wherein**
the hollow-cylindrical ring element (50) is welded to the outer surface of the inner section (46) of the plug-in sleeve (38).

4. Connecting arrangement according to at least one of the preceding claims,
**wherein**
the inner section (46) facing away from the hose is limited by a ring-like or bead-like stop (54).

5. Connecting arrangement according to at least one of the preceding claims,
**wherein**
the plug-in sleeve (36, 38) is chamfered at its end (62) on the connection piece side.

## Revendications

1. Dispositif de liaison entre un tuyau de sprinkler (34) comprenant un tuyau plissé ou ondulé (40) avec une enveloppe (42) entourant celui-ci, avec un embout tubulaire (36, 38) placé à l'extrémité du tuyau, et un élément de raccordement tubulaire (64, 78),
**caractérisé en ce**
**que** l'embout (36, 38) est une douille enfichable reliée à l'élément de raccordement tubulaire (64, 78) par l'intermédiaire d'un circlips (74, 86), que la douille enfichable comprend à son extrémité côté tuyau deux parties annulaires (44, 46) séparées par un changement de niveau (48) dont la partie extérieure (44) présente un diamètre extérieur inférieur à la partie intérieure voisine (46), que la partie intérieure présente un diamètre extérieur supérieur au diamètre intérieur du tuyau plissé ou ondulé, que le tuyau plissé ou ondulé est soudé à la douille enfichable dans la zone du changement de niveau, que l'enveloppe s'étend le long de la partie intérieure (46), que la douille enfichable est soudée à un élément annulaire (50) cylindrique creux dont l'étendue axiale en projection radiale engage aussi bien la zone d'extrémité du tuyau plissé ou ondulé que celle de l'enveloppe, et que l'élément annulaire est comprimé avec l'enveloppe.

2. Dispositif de liaison selon la revendication 1,
**caractérisé en ce**
**que** l'élément annulaire (50) cylindrique creux, tel qu'une bague de soudage, présente une étendue axiale telle, que son extrémité côté tuyau s'étend sur ou approximativement sur un plan pouvant être formé par l'extrémité côté tuyau de la douille enfichable (36, 38).

3. Dispositif de liaison selon la revendication 1 ou 2,
**caractérisé en ce**
**que** l'élément annulaire (50) cylindrique creux est soudé à la surface extérieure de la partie intérieure (46) de la douille enfichable (38).

4. Dispositif de liaison selon au moins l'une des revendications précédentes,
**caractérisé en ce**
**que** la partie intérieure (46) est, du côté opposé au tuyau, limitée par une butée (54) en forme d'anneau ou de bourrelet.

5. Dispositif de liaison selon au moins l'une des revendications précédentes,
**caractérisé en ce**
**que** la douille enfichable (36, 38) est chanfreinée à son extrémité côté pièce de raccordement (62).
